# EUROPEAN PATENT SPECIFICATION

(11) **EP 2 349 726 B1**
(45) Date of publication and mention of the grant of the patent: **26.09.2012**
(21) Application number: 09736999.5
(22) Date of filing: 22.10.2009
(51) Int. Cl.: H04N 1/113, G06K 15/12, B41J 2/47, G02B 26/12, H04N 1/192

(54) **INKJET PRINT ENGINE HAVING A PLURALITY OF LASER SCANNING UNITS**
TINTENSTRAHLDRUCKMASCHINE MIT MEHREREN LASERABTASTEINHEITEN
MOTEUR D IMPRESSION À JET D ENCRE COMPORTANT UNE PLURALITÉ D UNITÉS DE BALAYAGE LASER

(30) Priority: 31.10.2008 EP 08168024
(43) Date of publication of application: 03.08.2011
(73) Proprietor: OCE-Technologies B.V., 5900 CA Venlo (NL)
(72) Inventor: HEEREN, Theodorus A.G., NL-5912 JB Venlo (NL)
(74) Representative: De Jong, Robbert Arij Jeroen
(86) International application number: PCT/EP2009/063893
(87) International publication number: WO 2010/049342

(56) References cited:
- EP-A- 0 542 544
- EP-A- 0 729 265
- EP-A- 1 595 705
- WO-A-01/72518
- US-A1- 2002 089 580

## Description

The invention relates to the field of printing using laser light to apply energy to an amount of ink at a laser beam spot position, and more specifically to a printing engine and a printing method for applying energy to an amount of ink at a laser beam spot position.

WO 01/72518 A1 discloses a printing method for the transfer of a printing substance from a color support onto a printing substrate, wherein the printing substance undergoes a volume and/or position change by means of hitting the printing substance by laser light. The color support supports a film of the printing substance. The laser beam is scanned over the color support, and printing substance is transferred to the printing substrate while the printing substrate is guided in a small distance in front of the color support. Using short laser pulses of a high energy, printing dots are produced by rapid vaporization of printing substance, thereby blowing printing substance away from the color support onto the printing substrate.

It is an object of the invention to improve the printing quality of a printing engine which uses laser light to apply energy to an amount of ink.

The inventor has found out that in a conventional method of printing wherein a printing substance is transferred from a color support onto a printing substrate, wherein the printing substance undergoes a volume and/or position change by means of heating using a laser beam, the printing quality is limited by the nature of the process. Because of the energy required for heating the ink, a high power laser is required. The inventor has found out, that when a high power laser, for example a laser having a power of 50 to 100 watt, is scanned along the color support, the high energy of the short laser pulses creates shock waves in the printing substance film on the color support, which shock waves interfere with the printing process at neighboring dot positions. Thus, crosstalk occurs. Due to this, the printing of neighboring dots in the main scanning dimension is disturbed. This limits the printing quality.

To improve the printing quality, in a first aspect of the invention, a printing engine is provided, comprising:
- an ink support adapted to support an amount of ink,
- a plurality of laser scanning units, each laser scanning unit comprising a laser adapted to emit a laser beam; and directing means for directing the laser beam onto the ink support,
wherein the laser scanning unit is adapted to apply energy to said amount of ink at a laser beam spot position for locally transferring at least a part of the ink from the ink support onto a printing medium,
and wherein the laser scanning units are adapted to simultaneously scan the ink support substantially in a main scanning direction with respective laser beam spot positions, said laser beam spot positions being remote from each other.

The term "simultaneously scan" means that the laser beam spot positions are simultaneously passed over the ink support in the main scanning direction. While the laser beam spot positions are simultaneously passed over the ink support in the main scanning direction, the laser beam spot positions are kept remote from each other.

The term "remote" means that the distance between each two laser beam spot positions is larger than a distance between two neighboring dot printing positions, i.e. the reciprocal value of the printing resolution, in the main scanning direction and/or perpendicular to the main scanning direction. For example, the distance between each two laser beam spot positions is at least twice said distance between two neighboring dot printing positions. In particular, the distance is large enough to substantially avoid the shock wave interference or crosstalk problem between two simultaneously printed dots as well as between two dots printed consecutively by different laser beams. This distance depends on the printing speed and on the wave propagation characteristics of the ink and can be determined, e.g., by experiment. A suitable distance may be as small as, e.g., 80 micrometers. However, the distance may also be as large as one or more millimetres.

For example, image information corresponding to one line to be printed in the main scanning direction may be shared between the laser scanning units, and each laser scanning unit may scan only a section of the ink support in the main scanning direction. Thus, the laser scanning units and the respective laser beam spot positions may be arranged in a staggered configuration in the main scanning direction, i.e. distributed along the main scanning direction.

Additionally or alternatively, the laser scanning units may scan the ink support in an interlaced configuration, thereby sharing the image information to be printed. Thus, the laser scanning units and/or the respective laser beam spot positions may be arranged in a staggered configuration in the sub scanning direction, i.e. distributed along the sub scanning direction, i.e. perpendicular to the main scanning direction. For example, the laser beam spot positions are staggered in the sub scanning direction.

For example, the laser beam spot positions may be both staggered in the sub scanning direction and in the main scanning direction, the laser beam spot positions being remote from each other only in the main scanning direction, whereas in the sub scanning direction, the laser beam spot positions may correspond to image lines which are immediately adjacent to each other. Because of the distance between the laser beam spot positions in the main scanning direction, crosstalk between pixels of neighboring image lines is avoided.

Thus, the invention allows to reduce the scanning speed as compared to a printing method where one laser beam spot position is passed over the whole width of the ink support in the main scanning direction for every line to be printed. Moreover, the invention allows to apply lasers of less power, because the image information may be shared. These aspects are advantageous in that they facilitate the improvement of the printing quality due to minimizing the shock wave interference effect mentioned above.

Because each laser scanning unit comprises a directing means, the light path is kept simple as compared to a conventional laser scanning system wherein, e.g., three laser beams share one rotating polygon mirror. Thereby, focus control is facilitated.

In an embodiment, the ink support is a cylinder rotatable about the cylinder axis. An outer surface of the ink support may be flat or may be structured. The amount of ink is preferably a substantially continuous ink layer. In such an embodiment, the main scanning direction may be parallel to the cylinder axis. In another embodiment the ink support may have a substantially flat surface, e.g. a surface of a conveyor belt, or may be a stationary container holding the amount of ink.

Preferably, the plurality of laser scanning units comprises a number of at least 8, more preferably at least 10 laser scanning units. For example, 20 laser scanning units may be present.

In a preferred embodiment, the lasers are stationary, and the directing means direct the laser beam onto the ink support by deflecting the laser beam in an appropriate, e.g. varying, manner in order to scan the ink support with the respective laser beam spot position.

The energy may be applied directly and/or indirectly to the amount of ink at the laser beam spot position. In one embodiment, the laser energy is directly applied to the amount of ink at the laser beam spot position. For example, the laser light is absorbed by the amount of ink. In another embodiment, the laser energy is indirectly applied to the amount of ink. For example, the laser light is absorbed by absorption means arranged in or next to the amount of ink. The absorption means may comprise an absorption layer of the ink support.

Preferably, the printing engine further comprises modulating means for modulating an intensity of each laser beam corresponding to image information supplied to the printing engine. Because of the reduced scanning speed, bandwidth requirements of the modulating means, e.g. the laser drive electronics of a laser diode, can also be considerably reduced. This is highly advantageous because of the high currents involved. For example, a conventional single laser scanning unit would require a scanning frequency of 12.5 kHz, resulting in a polygon speed of 1.6 kHz if the polygon mirror has 8 faces. However, with a plurality of e.g. 20 laser scanning units, a scanning frequency of 1.25 kHz is possible using a polygon mirror with 4 faces rotating at 325 Hz and requiring only a considerably reduced bandwidth.

Preferably, the lasers are laser diodes. Because the maximum required power of the laser is reduced, laser diodes can be advantageously applied. For example, laser diodes having an output power of at least approximately 5 watt each may be used. It is a further advantage of the invention that it allows to use low cost diode lasers instead of a very costly high power laser.

In one embodiment, the laser beam spot positions are remote from each other in the main scanning direction. Thus, because the full width of the ink support in the main scanning direction is available for distributing the laser beam spot positions, a large distance between each two laser beam spot positions is possible. Thus, shock wave interference between the different laser beam spot positions is avoided.

In one embodiment, the laser beam spot positions are remote from each other in the sub scanning direction, i.e. perpendicular to the main scanning direction. For example, the laser scanning units scan the ink support in an interlaced arrangement. Interlaced scanning allows to reduce the scanning speed in order to minimize shock wave interference, because a plurality of scan lines is scanned simultaneously.

In one embodiment, the printing engine further comprises modulating means for modulating an intensity of each laser beam corresponding to image information supplied to the printing engine, and image information corresponding to one line to be printed in the main scanning direction is shared between the laser scanning units. The modulating means modulates an intensity of each laser beam corresponding to scan operations of the laser scanning units and corresponding to image information supplied to the printing engine. Because the image information is shared between the scanning units, it is not required that one laser beam scans the whole width of the ink support in the main scanning direction in order to print one line of image information. Thus, the scanning speed can be reduced while maintaining a high printing speed in the sub scanning direction, i.e. perpendicular to the main scanning direction.

In one embodiment, the ink support is divided into scanning sections in the main scanning direction, and each laser scanning unit is associated to one of these scanning sections, and each laser scanning unit is adapted to scan an associated scanning section of the ink support in substantially the main scanning direction. Thus, the scanning operation of each laser scanning unit is restricted to substantially the associated scanning section of the ink support. However, synchronization and focus control measures may require an actual scanning operation to be performed outside the scanning sections. By dividing the ink support into scanning sections in the main scanning direction, the scanning length of each laser scanning unit is reduced as compared to the total scanning length of the ink support in the main scanning direction (corresponding to the width of the ink support). Thus, the length of the path of light can be significantly reduced. For example, if a single laser beam was used to scan a 320 mm wide area of the ink support, the maximum length of a path of light would typically be around 400†mm. By dividing the ink support, for example, into 10 scanning sections, the maximum length of the path of light may be reduced to 40 mm. This facilitates the focussing of the laser beams into small beam spots with small sized, low cost optics.

In one embodiment, the laser scanning units are arranged in a line in the main scanning direction. For example, the positions of the laser scanning units may correspond to the positions of the scanning sections described above. Arranging the laser scanning units in the main scanning direction facilitates sharing image information corresponding to one line to be printed in the main scanning direction between the laser scanning units.

Preferably, the directing means of each laser scanning unit comprise at least one movable mirror surface for deflecting the laser beam. For example, a rotatable polygon mirror may be used having, for example, 8 mirror surfaces. When each laser scanning unit comprises at least one movable mirror surface for deflecting the laser beam, this simplifies the light path of each laser scanning unit and, thus, facilitates focus control, as compared to a structure where several laser beams would share one rotatable polygon mirror.

In one embodiment, the directing means of each laser scanning unit comprise at least one rotatable mirror surface adapted to be rotated about a rotation axis, the mirror surface having a mean mirror surface normal which is tilted, in particular, slightly tilted with respect to the rotation axis. This laser scanning unit may also be used independently from the printing engine, the ink support, and the arrangement of a plurality of laser scanning units as will be described further below. The mean mirror surface normal is rather parallel to than perpendicular to the rotation axis. In particular, the mean mirror surface normal is far from being perpendicular to the rotation axis. In the conventional polygon mirror system, the mirror surface normal of each mirror surface is perpendicular to the rotation axis of the polygon mirror.

In one embodiment, the laser scanning unit is adapted to transfer ink from the ink support onto a printing medium arranged in front of the ink support by applying energy to said amount of ink at a laser beam spot position. The printing medium is, for example, a printing substrate such as a sheet or a web of paper. However, the printing medium may also be an intermediate printing medium such as a drum or belt for transferring ink from the ink support to a printing substrate. Because the laser light is used to transfer ink from the ink support onto the printing medium, a printing matrix or printing plate can be dispensed with. Thus, digital printing is greatly facilitated for a wide variety of inks including phase change ink and radiation curable ink. In one embodiment, the amount of ink comprises at least one of flexographic ink, water based ink, rotogravure ink, electro-adhesive gel ink, and electro coagulation ink. Thus, non-dry inks may be advantageously used in laser printing. For each of these inks, the invention is advantageously applied to enable a digital printing process. The comparatively high laser power of, for example, a plurality of laser scanning units with laser diodes makes it possible to directly activate the ink on an ink support or to jet the ink from an ink support at a laser beam spot.

In a further aspect of the invention, a printer comprising a printing engine as described above is provided.

In a further aspect of the invention, a method of printing is provided, comprising the steps of:
- simultaneously scanning an ink support substantially in a main scanning direction with a plurality of laser beam spot positions of a plurality of lasers, said ink support carrying an amount of ink;
- applying energy to said amount of ink at the laser beam spot positions, corresponding to image information, for locally transferring at least a part of the ink (16) from the ink support (10) onto a printing medium;
wherein each laser corresponds to a laser scanning unit comprising directing means for directing a laser beam emitted by the laser onto the ink support,
and wherein the laser beam spot positions are remote from each other.

Advantages and further advantageous features of the method of printing correspond to those of the printing engine as described above.

In a further aspect, there is provided, independent from a printing engine, a laser scanning unit comprising:
- a laser adapted to emit a laser beam, and
- directing means for directing the laser beam onto the scan surface,
wherein the directing means comprise at least one rotatable mirror surface adapted to be rotated about a rotation axis, the mirror surface having a mean mirror surface normal which is tilted, in particular slightly tilted, with respect to the rotation axis.

In particular, the mean mirror surface normal is rather parallel to than perpendicular to the rotation axis. That is, unlike in a conventional polygon mirror, the mean mirror surface normal is far from being perpendicular to the rotation axis. For example, the directing means are adapted to scan the scan surface substantially in a main scanning direction with a laser beam spot position.

When the directing means comprise, for example, two such rotatable mirror surfaces, which are sequentially arranged in the light path, the two rotating mirror surfaces may be adapted to produce a substantially straight scanning movement of the laser beam, the laser beam spot performing a periodically recurring movement. The movement of the laser beam is, for example, a closed path comprising a forward movement and a backward movement substantially along a straight scan line. A slight curvature of the scanning path may be compensated, e.g., by adapting the image information sent to a printing engine comprising this laser scanning unit.

This laser scanning unit may be employed in any other technical application, such as a laser printer for printing with toner. Further below, an example of a laser scanner unit will be described, said laser scanning unit being adapted to apply energy to an amount of ink at a laser beam spot position.

Preferred embodiments of the invention will now be described in conjunction with the drawings, in which same reference numerals refer to same elements and in which:
Fig. 1A is a schematic partial cross sectional view of a first exemplary embodiment of a printer according to the present invention;
Fig. 1B is a schematic partial cross sectional view of a second exemplary embodiment of a printer according to the present invention;
Fig. 2 is a schematic top view of a plurality of laser scanning units for scanning the ink support;
Fig.3 schematically shows details of a laser scanning unit;
Fig. 4 schematically shows laser scanning spot motions in one embodiment of the invention;
Fig. 5 schematically shows laser scanning spot motions in another embodiment of the invention;
Fig. 6 schematically shows laser scanning spot motions in a further embodiment of the invention;
Fig. 7 schematically shows laser scanning spot motions in a further embodiment of the invention;
Fig. 8 schematically shows a further embodiment of the laser scanning unit; and
Fig. 9 schematically shows laser scanning spot motions of the laser scanning unit of Fig. 8 in detail.

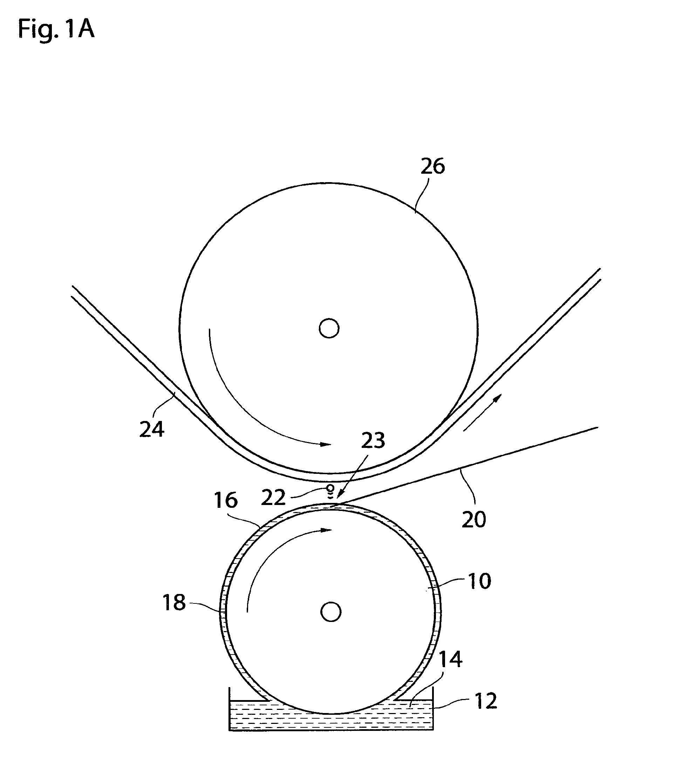

Fig. 1A schematically shows a cylindrical ink support 10 of a printing engine, which is rotatable about its axis as indicated by an arrow. An ink supply 12 is adapted to supply ink 14 to the ink support 10, thereby forming a homogeneous and continuous amount of ink 16 on a cylindrical outer surface 18 of the ink support 10. The ink 14 is, for example, flexographic or rotogravure ink.

A surface 18 of the ink support 10 is scanned by a plurality of laser beams, of which one laser beam 20 is shown in Fig. 1A, in substantially a main scanning direction which is perpendicular to the plane of view in Fig. 1A. When the laser beam 20 hits the ink support 10 at a higher power level, ink is locally heated or vaporized, and a jet 22 of ink is created at the laser beam spot position 23 and is jetted towards a printing medium 24, for example a sheet of paper.

The printing medium 24 is guided in close proximity to the amount of ink 16 past the ink support 10, as is indicated by an arrow. In Fig. 1A, a guide roller 26 is exemplarily shown. The rotation axis of the guide roller 26 is parallel to the rotation axis of the ink support 10. When the jet 22 hits the printing medium 24, a dot is printed.

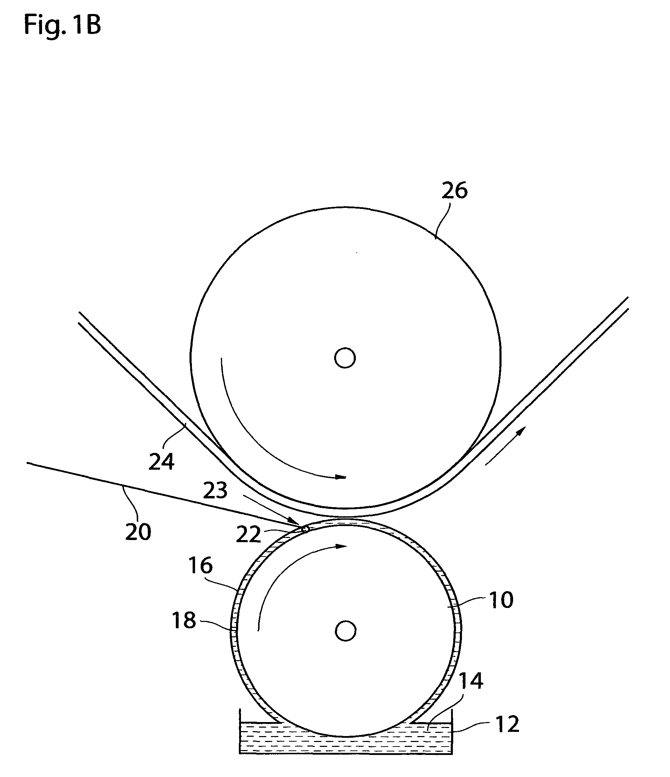

Fig. 1B shows another embodiment of a printing engine according to the present invention. Like in the embodiment of Fig. 1A, in the embodiment of Fig. 1B, a cylindrical ink support 10 of a printing engine is rotatable about its axis as indicated by an arrow. An ink supply 12 is adapted to supply an amount of ink 14 to the ink support 10, thereby forming a homogeneous and continuous amount of ink 16 on a cylindrical outer surface 18 of the ink support 10. In this embodiment, the ink 14 is, for example, a phase change ink or a gelling ink, like a radiation curable gelling ink.

A surface 18 of the ink support 10 is scanned by a plurality of laser beams, of which one laser beam 20 is shown in Fig. 1B, in substantially a main scanning direction which is perpendicular to the plane of view in Fig. 1B. When the laser beam 20 hits the ink support 10 at a higher power level, ink is locally heated. Due to the local heating, the viscosity may locally be lowered or the ink may locally change its phase from a (semi-) solid state to a liquid state. Thus, a droplet 22 of ink is created in the amount of ink at a laser beam spot position 23. The local change in the properties of the ink, such as a change of the phase, is such that the droplet 22 of ink is easily transferable to the printing medium 24, for example a sheet of paper or a intermediate belt, while the remaining part of the amount of ink remains on the ink support 10.

For actual transfer the printing medium 24 is in moving contact with the amount of ink 16. In Fig. 1B, a guide roller 26 is exemplarily shown for bringing the printing medium 24 and the amount of ink 14 in contact with a predetermined pressure. The pressure is selected such that an optimal transfer of the droplets 22. When the droplet 22 is transferred to the printing medium 24, a dot is printed.

The exemplary embodiments of Fig. 1A and 1B are merely provided as examples and numerous other printing engines may employ a laser scanning module according to the present invention for locally transferring at least a part of an amount of ink from an ink support onto a printing medium.

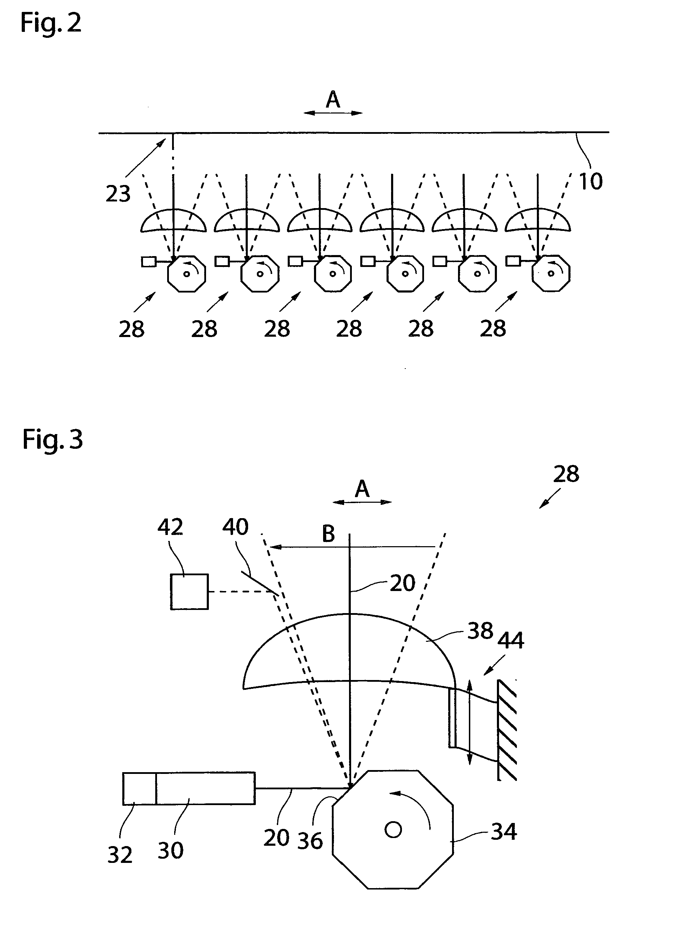

Fig. 2 shows a plurality of laser scanning units 28 arranged in a line in the main scanning direction for scanning the ink support 10. The main scanning direction is indicated by an arrow A. To simplify the figure, only six laser scanning units 28 are shown. However, the number of laser scanning units may, for example, be in the range of 10 to 20.

Fig. 3 shows one of the laser scanning units 28 in detail. A diode laser 30 emits a laser beam 20. The laser 30 is equipped with modulating means 32 for modulating an intensity of the laser beam 20 corresponding to image information supplied to the printing engine.

The laser beam 20 is deflected by a rotatable polygon mirror 34, having, for example, eight faces or mirror surfaces 36. The mirror 34 functions as a directing means for directing the laser beam 20 onto the ink support 10. The deflected laser beam 20 passes an f-theta-optics having a collimator lens 38 for focussing the laser beam at the laser beam spot position on the ink support 10. By rotation of the polygon mirror 34, the laser beam spot position scans the ink support 10 in a direction indicated with an arrow B, this direction approximately corresponding to the main scanning direction A.

At the end of each laser scanning motion, the laser beam 24 reaches a mirror 40, which deflects the beam 20 onto a 4-quadrant sensor 42. The sensor 42 is equipped with four small photodiodes in order to measure the spot shape at the end of each scan. A voice coil 44 is arranged at the collimator lens 38 in order to adjust its position in the direction of the laser beam 20. The voice coil 44 is controlled by a controller receiving signals from the sensor 42 and using a mathematical focus signal control strategy to keep the spot of the laser beam focused on the ink support 10. This control strategy is known as such, for example, from the focus control in CD/DVD players. Thereby, the laser beam spot can be kept focused in spite of wave length changes of the laser, e. g. due to junction temperature variations of the diode laser.

The sensor 42 is, for example, also used to calibrate the laser current once per scan. For example, two laser current levels are used: a high level or on-level, at which the laser 30 produces its nominal maximum light output, and an off-level. The off-level is, for example, a current level at which the light output of the laser is 20 times smaller than at the on-level. The lasing threshold current and the steepness, i.e. light output over current, are estimated from the measurements of the sensor 42, and the corrected laser current levels are used in the next scan for the diode laser 30 and the modulating means 32.

Thus, laser characteristics are calibrated and/or controlled using the sensor 42 at least once during each laser scanning motion. Thus, variations of laser characteristics depending on the laser junction temperature, such as the current-to-output-power dependency, the threshold current, the steepness, and/or the main wave length of the laser diode may be compensated for. Thus, a mechatronic stabilization of the diode laser beam spot is performed. Thereby, reproducible laser scanning spot motions are provided. For example, the reproducibility of the spot positions on the ink support 10 may be 2 micrometers or better.

The plurality of laser scanning units allows, for example, when printing with a resolution of 600 dpi, to provide a laser energy per pixel of, for example, 0.5 to 2 microjoule. A switching time of the laser modulation between on-level and off-level is, for example, 1 to 2 nanoseconds. The laser beam spot size, that is, the focus size, is, for example, approximately 40 µm x 40 µm. However, due to the continuous scan movement, the momentary spot size may also be smaller in the main scanning direction. For example, the spot size may be approximately 10 µm x 40 µm.

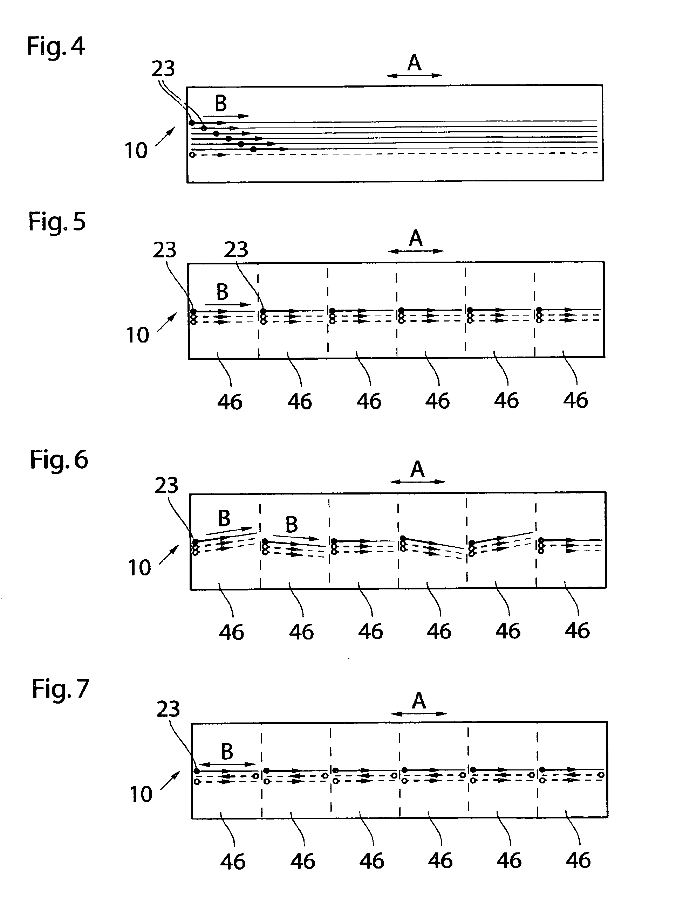

Fig. 4 schematically shows scanning motions of the laser beam spot positions 23 relative to the surface 18 of the ink support 10 in the main scanning direction A.

The ink support 10 is scanned in an interlaced configuration of the laser beam spot positions 23, and, furthermore, the laser beam spot positions 23 of the respective laser scanning units 28 of Fig. 2 are staggered in the main scanning direction A. Each laser scanning module 28 scans the whole width of the ink support 10. The interlaced configuration is achieved, for example, by staggering the laser scanning modules 28 in the sub scanning direction by a distance of, for example, corresponding to one line of image information. Because of the larger distance in the main scanning direction A, crosstalk is avoided.

After the laser scanning modules 28 have scanned the full width of the ink support 10, the ink support 10 is moved in circumferential direction, and the next scans corresponding to further pixel lines of image information begin. Only the first line of the next scans is indicated in Fig. 4 by an open circle and a dashed line and arrow.

Figs. 5 to 7 schematically show further embodiments of scanning motions of the laser beam spot positions relative to the surface 18 of the ink support 10 in the main scanning direction A. As is indicated by vertical dashed lines, the ink support 10 is divided into scanning sections 46, each scanning section being associated to one of the laser scanning units 28. Full circles indicate the starting position of the laser beam spot scanning motions which are indicated by straight lines and arrows. Open circles indicate the beginning of the next scans corresponding to further pixel lines of image information indicated by dashed lines and arrows. The scanning sections 46 are seamlessly arranged; that is, there is no gap between the scans of neighboring scanning sections.

In Fig. 5, each laser scanning unit scans the associated scanning section 46 line-wise, i.e., one line after the other. Image information corresponding to one line to be printed in the main scanning direction A is shared between the laser scanning units 28, and the respective laser beam spot positions of the laser scanning unit 28 have a distance corresponding to the width of the scanning sections 46.

Fig. 6 illustrates a similar arrangement of laser scanning units. However, Fig. 6 differs from Fig. 5 in that the individual scanning motions of the laser scanning units are not exactly aligned with the main scanning direction A. However, the scan motions in the individual scanning directions B approximately correspond to the main scanning direction A. The deviation from the main scanning direction A is exaggerated in Fig. 6.

In order to compensate for the alignment errors between the scanning lines of the individual laser scanning units 28, the bitmap information sent to the modulating means 32 is adapted accordingly. This is possible due to the high reproducibility of the scan motions. Thereby; an exact printing of the image information is achieved even when the scanning lines or scanning motions along the direction B do only approximately correspond to the main scanning direction A. In the same manner, offsets in the sub scanning direction as well as deviations of the spot scanning motions from a straight line are handled.

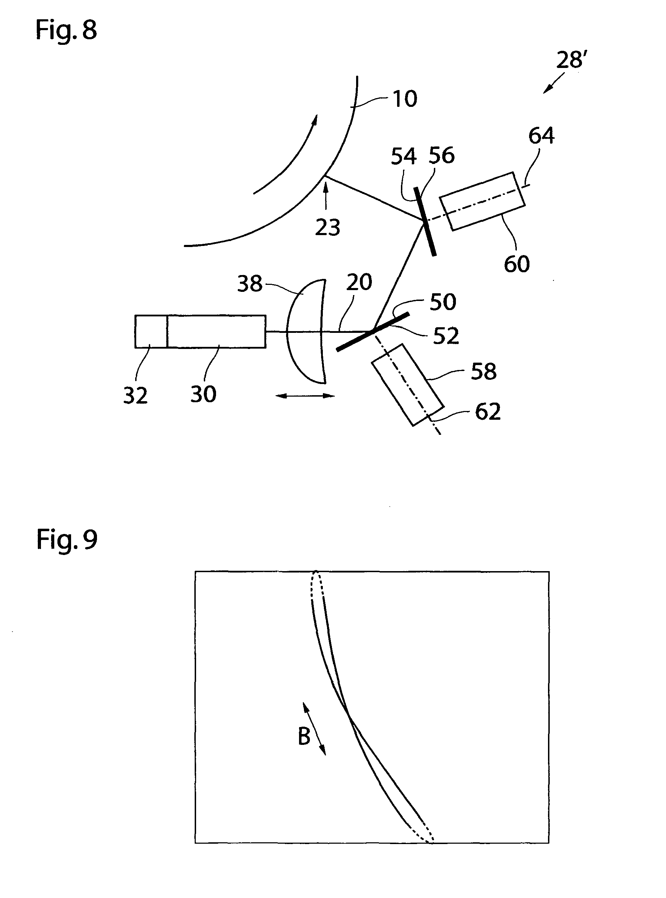

Fig. 7 shows scanning motions similar to that of Fig. 5. However, the laser beam spot of each laser scanning unit performs a forth and back scanning motion. After a first line is scanned from left to right, a second line is scanned from right to left. Such scanning motions are provided, for example, using an arrangement of a plurality of laser scanning units as will be now described in conjunction with Fig. 8 and Fig. 9.

Fig. 8 shows a further embodiment of a laser scanning unit 28' arranged at the ink support 10. For example, scanning units 28' may be used instead of the laser scanning units 28 in the printing engine of Fig. 2.

The diode laser 30, equipped with modulating means 32, emits a laser beam 20. The intensity of the laser beam 20 is modulated by the modulating means 32, e.g., corresponding to image information supplied to the printing engine.

The laser beam 20 passes a collimator lens 38 and is deflected via a surface 50 of a first rotating mirror 52 and a surface 54 of a second rotating mirror 56. The mirrors 52, 56 function as directing means for directing the laser beam 20 onto the ink support 10. The mirrors 52, 56 are driven by motors 58, 60 to rotate about respective rotation axes 62, 64. The surface normal of the surface 54 is slightly tilted with respect to the axis 62, and the surface normal of the surface 54 is slightly tilted with respect to the rotation axis 64. When the mirrors 52, 56 are rotated, the laser beam 20 leaving the second mirror 56 describes a motion path similar to a Lissajous figure. The mirrors 52, 56 have the same rotation speed, so that a closed path of the laser beam spot is created. The tilt angles of the mirror surfaces 50, 54, and the arrangement of the mirrors and the laser 30 are adapted to scan the surface of the ink support 10 in approximately a forth and back movement in a scanning direction B (Fig. 9).

Fig. 9 schematically shows an example of a scanning path of the laser beam spot of the laser beam 20. The spot path is approximately a slightly curved line. At the beginning and at the end of the line, the direction of the scanning movement is reversed. These parts of the scanning path, which are shown as broken lines in Fig. 9, are not used for scanning the ink support 10. For example, these parts may be masked by mirrors for deflecting the beam on a sensor, as in Fig. 3.

The spot path is very reproducible. Also, the length of the light path during a forth and back scan varies in a reproducible manner.

For example, the collimator lens 38 is equipped with a voice coil 44 as shown in Fig. 3 in order to enable the collimator lens 38 to be adjusted in a direction along the light path. Thereby, the focus and, thus, the spot size of the laser beam 20 may be kept constant during the scan movement. Because of the known dependency of the light path from the movements of the mirror surfaces 50, 54, the position of the collimator lens 38 may be controlled using feed forward control.

The modulating means 32 of the laser 30 may be controlled to compensate for speed differences of the laser beam spot over the scan movement. These speed differences also occur in a reproducible manner. Thus, the switching frequency of pixels to be scanned can be adapted to the focus speed of the laser beam 20.

A conventional laser scanning unit using a polygon mirror requires to avoid hitting the edges separating the mirror faces with the laser beam. Thus, it allows printing, for example, only during 30% of time, depending on the diameter of the laser beam. However, the laser scanning unit according to Fig. 8 may allow to print, for example, during 80% of the time. The scanning movement shown in Fig. 9 may, for example, be used for scanning the surface of the ink support 10 as described in conjunction with Fig 7 above. Similar bitmap adaptations as described in conjunction with Fig. 6 above may be applied. Because of the large duty cycle, the laser scanning unit 28' of Fig. 8 has a high efficiency.

Although the scanning module of Fig. 8 has been described in conjunction with scanning the ink support 10 of the printing engine of Fig. 1, the laser scanning module 28' may also be used for any other technical application, such as a conventional laser printer using toner and a low power laser.

The invention being thus described, it will be obvious that the same may be varied in many ways.

For example, in Fig. 1, the laser beam 20 hits the surface of the ink support 10 from radially outside. However, the ink support 10 may also have a transparent cylindrical outer surface wall, and the laser scanning units may be arranged, e.g. inside the ink support 10, such that the laser beams 20 hit the amount of ink 16 from below.

Furthermore, the laser beam 20 may be used to transfer ink from the ink support 10 to an ink transfer roller or ink transfer belt forming the printing medium. In this case, the printing medium may transfer the ink to a printing medium to be printed, for example, a sheet of paper.

Furthermore, the printing engine may comprise a transparent cylindrical ink transfer roller, and the laser scanning units may be arranged so that the laser beams 20 hit the ink support 10 from inside the ink transfer roller through an outer cylindrical, transparent wall of the ink transfer roller, thereby transferring ink to the transfer roller at the laser beam spot position.

Instead of the polygon mirror of Fig. 3 having eight faces, e.g. a polygon mirror having four faces may be applied.

Instead of or additionally to adjusting the position of the collimator lens 38, the position of the laser 30 could be adjusted, e.g. using an adjustment means similar to the voice coil 44.

Various other arrangements of printing engines for transferring flexographic, water based, rotogravure, electro-adhesive gel, or electro coagulation ink from an ink support onto a printing medium will be known to a person skilled in the art.

Furthermore, all the disclosed elements and features of each disclosed embodiment of the laser scanning unit, printing engine or printing method can be combined with, or substituted for, the disclosed elements and features of every other disclosed embodiment of the laser scanning unit, printing engine or printing method, except where such elements or features are mutually exclusive. Such variations are not to be regarded as a departure from the scope of the invention.

Furthermore, further to providing an on-level and an off-level of the laser beam 20, one or more greyscale levels are conceivable. A greyscale level of the laser beam at the laser beam spot position may result in the transfer of a smaller portion of ink from the ink support to the printing medium as compared to the transfer volume achieved by the on-level of the laser beam.

## Claims

1. A printing engine, comprising:
- an ink support (10) adapted to support an amount of ink (16),
- a plurality of laser scanning units (28), each laser scanning unit comprising a laser (30) adapted to emit a laser beam (20); and directing means (34; 52, 56) for directing the laser beam (20) onto the ink support (10),
wherein the laser scanning unit (28) is adapted to apply energy to said amount of ink (16) at a laser beam spot position (23) for locally transferring at least a part of the ink (16) from the ink support (10) onto a printing medium (24),
and wherein the laser scanning units (28) are adapted to simultaneously scan the ink support (10) substantially in a main scanning direction (A) with respective laser beam spot positions (23), said laser beam spot positions being remote from each other.

2. The printing engine according to claim 1, wherein the lasers (30) are laser diodes.

3. The printing engine according to claim 1 or 2, wherein the laser beam spot positions (23) are remote from each other in the main scanning direction (A).

4. The printing engine according to any one of the preceding claims, wherein the laser beam spot positions (23) are staggered in a sub scanning direction.

5. The printing engine according to any one of the preceding claims, further comprising modulating means (32) for modulating an intensity of each laser beam (20) corresponding to image information supplied to the printing engine, wherein image information corresponding to one line to be printed in the main scanning direction (A) is shared between the laser scanning units (28).

6. The printing engine according to any one of the preceding claims, wherein the ink support (10) is divided into scanning sections (46) in the main scanning direction (A), each laser scanning unit (28) being associated to one of these scanning sections (46), and wherein each laser scanning unit (28) is adapted to scan an associated scanning section (46) of the ink support in substantially the main scanning direction (A).

7. The printing engine according to any one of the preceding claims, wherein the directing means (34; 52, 56) of each laser scanning unit (28) comprise at least one movable mirror surface (36; 50; 54) for deflecting the laser beam (20).

8. The printing engine according to any one of the preceding claims, wherein the directing means (52, 56) of each laser scanning unit comprise at least one rotatable mirror surface (50; 54) adapted to be rotated about a rotation axis (62; 64), the mirror surface (50; 54) having a mean mirror surface normal which is slightly tilted with respect to the rotation axis (62; 64).

9. The printing engine according to any one of the preceding claims, wherein the laser scanning unit (28) is adapted to transfer ink from the ink support (10) onto the printing medium (24), the printing medium being arranged in front of the ink support.

10. The printing engine according to any one of the preceding claims, wherein the amount of ink (16) comprises at least one of flexographic, water based, rotogravure, electro-adhesive gel, and electro coagulation ink.

11. A printer comprising a printing engine according to one of the preceding claims.

12. Method of printing, comprising the steps of:
- simultaneously scanning an ink support (10) substantially in a main scanning direction (A) with a plurality of laser beam spot positions (23) of a plurality of lasers (30), said ink support (10) carrying an amount of ink (16);
- applying energy to said amount of ink (16) at the laser beam spot positions (23), corresponding to image information, for locally transferring at least a part of the ink (16) from the ink support (10) onto a printing medium (24);
wherein each laser (30) corresponds to a laser scanning unit (28) comprising directing means (34; 52, 56) for directing a laser beam (20) emitted by the laser (30) onto the ink support (10),
and wherein the laser beam spot positions (23) are remote from each other.

## Patentansprüche

1. Druckwerk, aufweisend:
- einen Tintenträger (10), der dazu geeignet ist, eine Tintenmenge (16) zu tragen,
- eine Mehrzahl von Laserabtasteinheiten (28), wobei jede Laserabtasteinheit einen Laser (30), der geeignet ist, einen Laserstrahl (20) auszusenden, und Lenkmittel (34; 52, 56) zum Richten des Laserstrahls (20) auf den Tintenträger (10) aufweist,
wobei die Laserabtasteinheit (28) dazu eingerichtet ist, der Tintenmenge (16) an einer Laserlichtpunktposition (23) Energie zuzuführen, um lokal wenigstens einen Teil der Tinte (16) von dem Tintenträger (10) auf ein Druckmedium (24) zu übertragen,
und wobei die Laserabtasteinheiten (28) dazu eingerichtet sind, den Tintenträger (10) im wesentlichen in einer Hauptabtastrichtung (A) an jeweiligen Laserlichtpunktpositionen (23) gleichzeitig abzutasten, wobei die Laserlichtpunktpositionen entfernt voneinander sind.

2. Druckwerk nach Anspruch 1, bei dem die Laser (30) Laserdioden sind.

3. Druckwerk nach Anspruch 1 oder 2, bei dem die Laserlichtpunktpositionen (23) in der Hauptabtastrichtung (A) voneinander entfernt sind.

4. Druckwerk nach einem der vorstehenden Ansprüche, wobei die Laserlichtpunktpositionen (23) in einer Unterabtastrichtung gestaffelt sind.

5. Druckwerk nach einem der vorstehenden Ansprüche, weiter aufweisend Modulationsmittel (32) zum Modulieren einer Intensität jedes Laserstrahls (20) entsprechend dem Druckwerk zugeführter Bildinformation, wobei Bildinformation, die einer in der Hauptabtastrichtung (A) zu druckenden Zeile entspricht, unter den Laserabtasteinheiten (28) aufgeteilt wird.

6. Druckwerk nach einem der vorstehenden Ansprüche, wobei der Tintenträger (10) in der Hauptabtastrichtung (A) in Abtastabschnitte (46) unterteilt ist, wobei jede Laserabtasteinheit (28) einem dieser Abtastabschnitte (46) zugeordnet ist, und wobei jede Laserabtasteinheit (28) dazu eingerichtet ist, einen zugeordneten Abtastabschnitt (46) des Tintenträgers in im wesentlichen der Hauptabtastrichtung (A) abzutasten.

7. Druckwerk nach einem der vorstehenden Ansprüche, wobei die Lenkmittel (34; 52, 56) jeder Laserabtasteinheit (28) wenigstens eine bewegliche Spiegeloberfläche (36; 50; 54) zum Ablenken des Laserstrahls (20) aufweisen.

8. Druckwerk nach einem der vorstehenden Ansprüche, wobei die Lenkmittel (52, 56) jeder Laserabtasteinheit wenigstens eine rotierbare Spiegeloberfläche (50; 54) aufweisen, die dazu eingerichtet ist, um eine Rotationsachse (62; 64) gedreht zu werden, und wobei die Spiegeloberfläche (50; 54) eine mittlere Spiegeloberflächennormale hat, die in Bezug auf die Rotationsachse (62; 64) leicht geneigt ist.

9. Druckwerk nach einem der vorstehenden Ansprüche, wobei die Laserabtasteinheit (28) dazu eingerichtet ist, Tinte von dem Tintenträger (10) auf das Druckmedium (24) zu übertragen, wobei das Druckmedium vor dem Tintenträger angeordnet ist.

10. Druckwerk nach einem der vorstehenden Ansprüche, wobei die Tintenmenge (16) wenigstens eine von Flexodruck-, wasserbasierter, Rotationstiefdruck-, Elektroadhäsions-Gel-, und Elektrokoagulations-Tinte umfasst.

11. Drucker mit einem Druckwerk nach einem der vorstehenden Ansprüche.

12. Druckverfahren, mit den Schritten:
- gleichzeitiges Abtasten eines Tintenträgers (10) im wesentlichen in einer Hauptabtastrichtung (A) mit einer Mehrzahl von Laserlichtpunktpositionen (23) einer Mehrzahl von Lasern (30), wobei der Tintenträger (10) eine Tintenmenge (16) trägt;
- Zuführen von Energie zu der Tintenmenge (16) an den Laserlichtpunktpositionen (23) in Entsprechung zu Bildinformation, um lokal wenigstens einen Teil der Tinte (16) von dem Tintenträger (10) auf ein Druckmedium (24) zu übertragen;
wobei jeder Laser (30) einer Laserabtasteinheit (28) entspricht, die Lenkmittel (34; 52, 56) aufweist, um einen von dem Laser (30) ausgesandten Laserstrahl (20) auf den Tintenträger (10) zu richten,
und wobei die Laserlichtpunktpositionen (23) entfernt voneinander sind.

## Revendications

1. Moteur d'impression, comprenant :
- un support d'encre (10) qui est à même de supporter une certaine quantité d'encre (16),
- une pluralité d'unités de balayage laser (28), chaque unité de balayage laser comprenant un laser (30) qui est à même d'émettre un faisceau laser (20) ; et des moyens d'orientation (34 ; 52, 56) pour diriger le faisceau laser (20) sur le support d'encre (10),
dans lequel l'unité de balayage laser (28) est à même d'appliquer de l'énergie à ladite quantité d'encre (16) dans une position de spot de faisceau laser (23) pour transférer localement au moins une partie de l'encre (16) du support d'encre (10) sur un support d'impression (24), et
dans lequel les unités de balayage laser (28) sont à même de balayer simultanément le support d'encre (10) sensiblement dans une direction de balayage principale (A) avec des positions de spots de faisceaux laser respectives (23), lesdites positions de spots de faisceaux laser étant éloignées les unes des autres.

2. Moteur d'impression selon la revendication 1, dans lequel les lasers (30) sont des diodes laser.

3. Moteur d'impression selon la revendication 1 ou 2, dans lequel les positions de spots de faisceaux laser (23) sont éloignées les unes des autres dans la direction de balayage principale (A).

4. Moteur d'impression selon l'une quelconque des revendications précédentes, dans lequel les positions de spots de faisceaux laser (23) sont échelonnées dans une direction de sous-balayage.

5. Moteur d'impression selon l'une quelconque des revendications précédentes, comprenant par ailleurs des moyens de modulation (32) pour moduler l'intensité de chaque faisceau laser (20) en fonction d'informations d'image fournies au moteur d'impression, dans lequel les informations d'image correspondant à une ligne à imprimer dans la direction de balayage principale (A) sont partagées entre les unités de balayage laser (28).

6. Moteur d'impression selon l'une quelconque des revendications précédentes, dans lequel le support d'encre (10) est divisé en sections de balayage (46) dans la direction de balayage principale (A), chaque unité de balayage laser (28) étant associée à l'une de ces sections de balayage (46), et dans lequel chaque unité de balayage laser (28) est à même de balayer une section de balayage associée (46) du support d'encre sensiblement dans la direction de balayage principale (A).

7. Moteur d'impression selon l'une quelconque des revendications précédentes, dans lequel les moyens d'orientation (34 ; 52, 56) de chaque unité de balayage laser (28) comprennent au moins une surface de miroir mobile (36 ; 50 ; 54) pour dévier le faisceau laser (20).

8. Moteur d'impression selon l'une quelconque des revendications précédentes, dans lequel les moyens d'orientation (52, 56) de chaque unité de balayage laser comprennent au moins une surface de miroir rotative (50 ; 54) qui est à même de tourner autour d'un axe de rotation (62 ; 64), la surface de miroir (50 ; 54) ayant une normale moyenne à la surface de miroir qui est légèrement inclinée par rapport à l'axe de rotation (62 ; 64).

9. Moteur d'impression selon l'une quelconque des revendications précédentes, dans lequel l'unité de balayage laser (28) est à même de transférer de l'encre du support d'encre (10) sur le support d'impression (24), le support d'impression étant aménagé devant le support d'encre.

10. Moteur d'impression selon l'une quelconque des revendications précédentes, dans lequel la quantité d'encre (16) comprend au moins une encre flexographique, une encre à base d'eau, une encre d'impression en creux, un gel électro-adhésif et une encre à électrocoagulation.

11. Imprimante comprenant un moteur d'impression selon l'une quelconque des revendications précédentes.

12. Procédé d'impression comprenant les étapes consistant à :
- balayer simultanément un support d'encre (10) sensiblement dans une direction de balayage principale (A) avec une pluralité de positions de spots de faisceaux laser (23) d'une pluralité de lasers (30), ledit support d'encre (10) portant une certaine quantité d'encre (16) ;
- appliquer de l'énergie à ladite quantité d'encre (16) au niveau des positions de spots de faisceaux laser (23), en fonction d'informations d'image, pour transférer localement au moins une partie de l'encre (16) du support d'encre (10) sur un support d'impression (24) ;
dans lequel chaque laser (30) correspond à une unité de balayage laser (28) comprenant des moyens d'orientation (34 ; 52, 56) pour diriger un faisceau laser (20) émis par le laser (30) sur le support d'encre (10), et
dans lequel les positions de spots de faisceaux laser (23) sont éloignées les unes des autres.
